# EUROPEAN PATENT APPLICATION

(11) **EP 0 570 203 A2**
(43) Date of publication of application: **18.11.1993**
(21) Application number: 93303665.9
(22) Date of filing: 12.05.1993
(51) Int. Cl.: G11B 27/28, G11B 23/03, G11B 7/24, G11B 27/32

(54) **Optical disk for use in an optical data recording and/or reproducing apparatus**

(30) Priority: 14.05.1992 JP 121598/92
(71) Applicant: MATSUSHITA ELECTRIC INDUSTRIAL CO., LTD., Kadoma-shi, Osaka-fu, 571 (JP)
(72) Inventor: Satoh, Isao, Neyagawa-shi, Osaka (JP); Fukushima, Yoshihisa, Osaka-shi, Osaka (JP); Takagi, Yuji, Hirakata-shi, Osaka (JP); Azumatani, Yasushi, Neyagawa-shi, Osaka (JP); Hamasaka, Hiroshi, Nishinomiya-shi, Hyogo (JP); Hisakado, Yuji, Neyagawa-shi, Osaka (JP)
(74) Representative: Rackham, Stephen Neil

(57) **Abstract**

Compatibilities between a double-sided optical disk and a single-sided optical disk are assured when each disk is subject to data recording and reproduction operations by means of either a one-head type optical data recording and reproduction apparatus or a two-head type optical data recording and reproduction apparatus while allowing vertically inverted cartridge insertion for data recording and reproduction. Provided is an optical disk having a data recording area (25) and a volume management area (26) which includes an access mode registration area (27) for recording therein access mode data such as apparatus data representing the number of optical heads of the optical data recording and reproduction apparatus, the number of volumes of an optical disk, and sector recording order and/or track and sector recording units. Data recording and reproduction operations are effected by detecting the optical head (4A, 4B) facing each recording surface by means of a sensor (28), rotating the optical disk (1) forwardly or reversely, reading out access mode data from the access mode registration area (27), and switching signal paths between a channel data recording and reproduction circuit (7) and a laser drive circuit (8) and a signal reproduction head amplifier circuit by means of a signal selection circuit (18).

## Description

The present invention relates to an optical data recording and/or reproducing disk for use in an optical data recording and/or reproducing apparatus, and more particularly to an optical data recording and reproducing apparatus for recording and reproducing optical data on and/or from a double-sided optical disk.

In recent years, an optical disk memory technique has attracted a growing attention as a high-density non-contact data recording and reproducing technique, which has been studied and developed. It is a well known art that an optical disk has advantageous features which are not existing in any conventional magnetic disk in terms of its large capacity and non-contact data recording and reproducing method. Currently with regard to 5.25 inch disks, there is reported a development and production of a magnetic disk having a capacity of 1.5 GB and an optical disk having a capacity of 1 GB.

However, in the present situation employing a single optical disk in the apparatus, an on-line memory capacity which can be accessed without reversing the optical disk is a half of the total disk capacity since the optical data recording and reproducing apparatus has one head. In view of the above fact, there has been lately developed an optical data recording and reproducing apparatus capable of recording and reproducing data on dual sides of an optical disk using two optical heads.

The optical data recording and reproducing apparatus having two optical heads for a dual-sided optical disk can double the on-line capacity, increasing the operation speed by virtue of a simultaneous data recording and reproduction operation using the two heads, and increasing the access speed in data recording and reproduction operations through switching between the two optical heads.

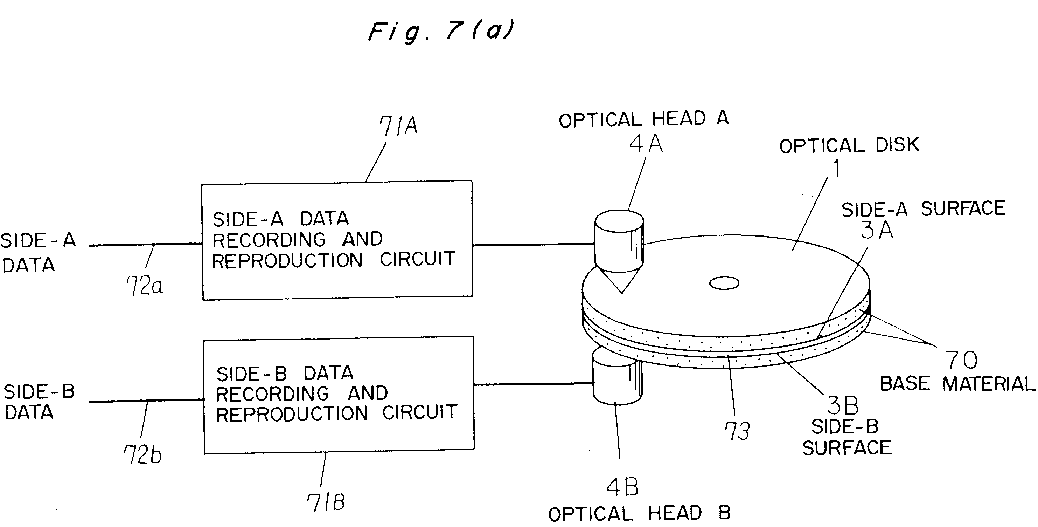

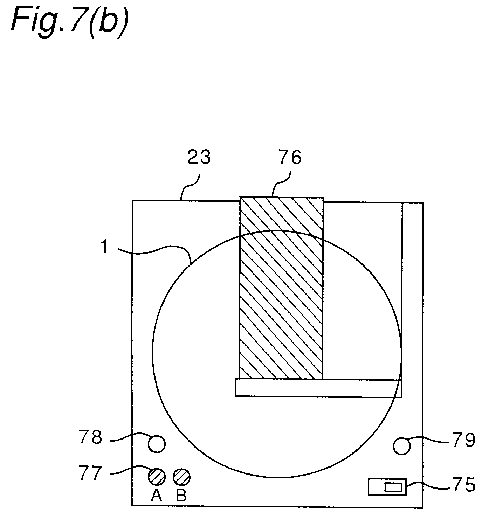

Fig. 7 (a) shows a schematic construction of a general optical data recording and reproducing apparatus employing a double-sided optical disk, where a well-known servo circuit, searching circuit, and the like are omitted for brevity.

Referring to Fig. 7 (a), reference numeral 1 denotes a dual-sided optical disk which has side-A and side-B recording films 3A and 3B formed on a pair of disk base materials 70 facing to each other through an adhesive layer 73. The recording films 3A and 3B are securely bonded to each other by means of the adhesive layer 73 interposed between the recording films 3A and 3B. Laser beams are applied from a pair of optical heads 4A and 4B respectively onto the dual recording films 3A and 3B of the optical disk 1. Reference numerals 71A and 71B denote data recording and reproduction circuits for supplying recording signals to the optical heads 4A and 4B and demodulating reproduction signals fed back from the optical heads 4A and 4B, wherein reference numerals 72a and 72b denote the data to be recorded and/or reproduced on and/or from the recording films 3A and 3B.

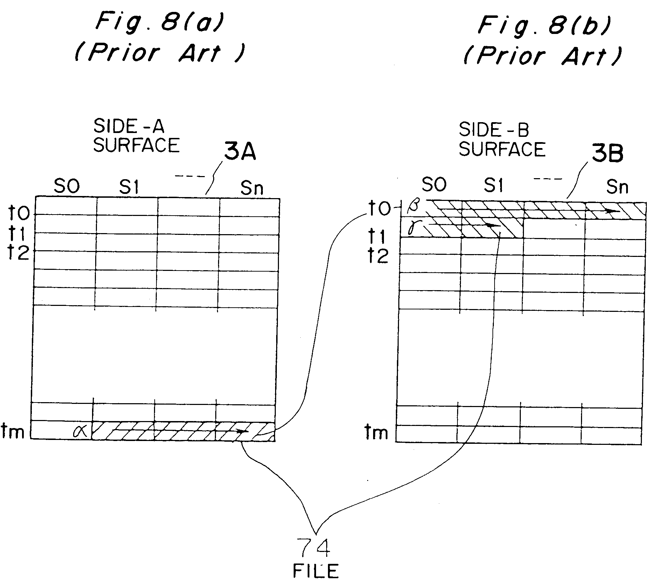

Figs. 8 (a) and 8 (b) show track allocations formed on the recording films 3A and 3B respectively when viewed from the optical heads 4A and 4B. The optical disk 1 is formed by forming a recording film on each of two replica disks reproduced from two master disks having reverse spiral directions of the tracks and physically coupling the two replica disks together in such a manner that the two recording films are faced to each other.

Referring to Figs. 8 (a) and 8 (b), reference characters S0, S1, S2, ..., Sn denote sectors each serving as the unit for recording and reproducing data, while the reference characters t0, t1, ..., tm denote tracks. The spiral directions of the tracks on the recording films 3A and 3B are reversely arranged. The last sector (the sector Sn of the track tm) of the side-A recording film 3A is continued to the first sector (the sector S0 of the track t0) of the side-B recording film 3B.

Now reference is made to the data recording operation of a file 74 with reference to Figs. 7, 8(a) and 8(b). The side-A data 72a is modulated by means of the data recording and reproduction circuit 71A and then recorded onto a data field of each sector with laser beams irradiated by means of the optical head 4A. The data recording operation onto the data field of each sector is performed in a direction as indicated by an arrow a in the order from the sectors S1, S2, ... of the track tm on the side-A recording film 3A. The file 74 has its data volume exceeding the capacity of the free area of the side-A recording film 3A, and therefore the excess data are subsequently modulated by the data recording and reproduction circuit 71B as the side-B data 72b which is to be recorded onto each sector of the side-B recording film 3B with laser beams irradiated by means of the optical head 4B. The data recording operation on the side-B recording film 4B is performed in a direction as indicated by an arrow β and γ from the sector S0 of the track t0 to the sector S1 of the track t1.

The following describes a reading operation of the data recorded on the sectors of the tracks in the above-mentioned manner.

When the optical head 4A accesses the sector S0 of the side-A recording film 3A, the data recording and reproduction circuit 71A demodulates the reproduction signal fed from the side-A recording film 3A through the optical head 4A and generates the side-A data 72a as the output signal thereof. Meanwhile, the data recording and reproduction circuit 71B demodulates the reproduction data fed from the side-B recording film 3B and generates the side-B data 72b as the output signal thereof.

However, any double-sided optical disk 1 having data recorded thereon always has a file 74 recorded on both the side-A recording film 3A and the side-B recording film 3B in a manner as described above. Therefore, when dual-sided optical disk is loaded in a conventional optical data recording and reproducing apparatus employing a single optical head, it has been impossible to record and reproduce the data onto and from the double-sided optical disk, which has been resulted in incompatibilities between different types of optical disks.

Furthermore, no conventional optical data recording and reproducing apparatus is designed to use such a double-sided optical disk, which has also involved a problem that the user cannot perceive whether a trouble occurred is attributed to a failure of the optical data recording and reproducing apparatus or to incompatibilities between different types of optical disks.

Furthermore, when using the double sided optical disk, the correspondence relation between the first and second optical heads and the side-A and side-B recording films 3A and 3B is fixed with regard to the recording signal and the reproduction signal. Therefore, the loading direction of the double sided optical disk is also limited. For the above reason, it has been impossible to provide a construction allowing a cartridge of the double sided optical disk to be reversibly inserted and loaded in an optical data recording and reproducing apparatus having a construction for a single optical head type disk.

According to a first aspect of this invention, an optical disk for in an optical data recording and/or reproducing apparatus, said optical disk is provided with at least one data recording film having a plurality of data recording tracks formed thereon, each track divided into a plurality of data recording sectors, each sector serving as a unit for recording and/or reproducing data thereon, said data recording film comprising:
a data recording area for recording optical data; and
a volume management area including an access mode registration area which records access mode data for defining a recording and/or reproducing procedure of data on said sectors to prescribe an order of the data to be recorded and/or reproduced on said sectors and defining a volume format of the optical disk.

According to a second aspect of this invention, an optical data recording and reproducing apparatus for recording and reproducing data, compatible with any of a single-sided optical disk having a single recording film and a double-sided optical disk having two recording films, each recording film formed thereon with a recording track divided into a plurality of sectors each serving as a unit for recording and reproducing data, said optical disk being put in a disk cartridge having a discrimination sensor hole for discriminating a recording film surface, said optical data recording and reproducing apparatus comprises:
optical disk rotating means for forwardly and reversely rotating said optical disk loaded thereon;
cartridge loading means for loading said disk cartridge onto said optical disk rotating means;
recording film surface detection means for detecting a loading condition of a recording film of said optical disk onto said optical disk rotating means by detecting the sensor hole of said disk cartridge;
optical head means for recording and/or reproducing a data signal on and/or from the recording film surface by applying a laser beam to the recording film surface;
servo means for focusing and tracking the laser beam from said optical head means onto a specified track;
track search means for searching a target track by controlling the transport of said optical head means;
signal reproduction means for amplifying a reproduction signal reproduced by means of said optical head means;
ID reproduction means for reading a sector address from an output of said signal reproduction means;
sector recording and reproduction control means for starting recording and reproduction of data by detecting a target sector address upon coincidence of the sector address output of said ID reproduction means with the target sector address;
data recording and reproduction means for effecting data recording and reproduction on the target sector of the recording film surface by an output data of said sector recording and reproduction control means;
laser drive means for modulating a laser beam of said optical head means by an output of said data recording and reproduction means; and
apparatus control means for controlling the data recording and reproduction on said optical disk by issuing a control command signal to each of said means and watching the condition of each of said means, wherein said apparatus control means detects each recording film surface facing an optical head by means of said recording film surface detection means to thereby rotate said optical disk rotating means forwardly or reversely, and said track search means searching a volume management area of the recording film surface, said data recording and reproduction means recording access mode data in an access mode registration area of each recording film surface of said optical disk, wherein said access mode data is composed of the number of optical heads of the optical data recording and reproducing apparatus, the number of data volumes of the optical disk, and a sector recording order and/or track recording and sector recording units for prescribing a volume format of said optical disk.

With the above mentioned arrangement of the optical data recording and reproducing apparatus according to the present invention, when recording and reproducing data on and/or from a double sided optical disk by means of two optical heads, the optical head facing each recording film is detected through a sensor hole of a cartridge of the disk to rotate the optical disk forwardly or reversely. Then access mode data representing a volume format of apparatus data representing the number of optical heads for use in the optical data recording and reproduction apparatus, the number of volumes of the optical disk, sector recording order and/or track recording and sector recording units, and the like are read out of the access mode registration area to be stored in a memory. According to the above mentioned data stored in the memory, signal paths between the data recording and reproduction means and the first and second laser drive means, and signal paths between the first and second laser drive means and the first and second signal reproduction means are switched over by the signal selection means.

At the time of loading an optical disk, apparatus data representing the number of optical heads for use in the apparatus and access mode data representing the volume format such as the sector recording order of each recording film are read from the sector recording access mode registration area to check the compatibility between the apparatus and the loaded disk. With the above operation, incompatibilities in data recording of the disk are detected to assure data compatibilities between a double sided optical disk recorded in an optical data recording and reproduction apparatus having a single optical head and a double sided optical disk recorded in an optical data recording and reproduction apparatus having two optical heads.

Particular embodiments of optical disks and apparatus in accordance with this invention will now be described, with reference to the accompanying drawings, in which:-
Figure 1 is a block diagram of an optical data recording and reproducing apparatus having two optical heads in accordance with the present invention;
Figure 2 is a block diagram of an optical data recording and reproducing apparatus having two optical heads in accordance with the present invention;
Figures 3 (a), 3 (b) and 3 (c) are explanatory diagrams of volume management areas each including an access mode registration area of an optical disk in accordance with an embodiment of the present invention;
Figures 4 (a), 4 (b), 4 (c), and 4 (d) are explanatory diagrams showing concrete constructions of optical disk volume formats adopted in the embodiment of the present invention;
Figures 5 (a), 5 (b) and 5 (c) are timing charts for explaining the sector access order in recording volumes D and E shown in Figures 4 (c) and 4 (d);
Figures 6 (a) and 6 (b) show a flow chart of the fundamental operations of the one head type optical data recording and reproducing apparatus and the two head type optical data recording and reproducing apparatus according to the present invention;
Figure 7 (a) is a schematic view of a simplified general optical data recording and reproducing apparatus employing a double sided optical disk;
Figure 7 (b) is a schematic plan view of a disk cartridge according to the present invention; and
Figures 8 (a) and 8 (b) are explanatory diagrams of track allocations of the recording films 3A and 3B of a conventional optical disk.

The following describes preferred embodiments of an optical data recording and reproducing apparatus in accordance with the present invention with reference to the attached drawings. Before the description proceeds, it is to be noted that, since the basic structures of the embodiments are similar to that of the conventional one, like parts are designated by the same reference numerals throughout the drawings.

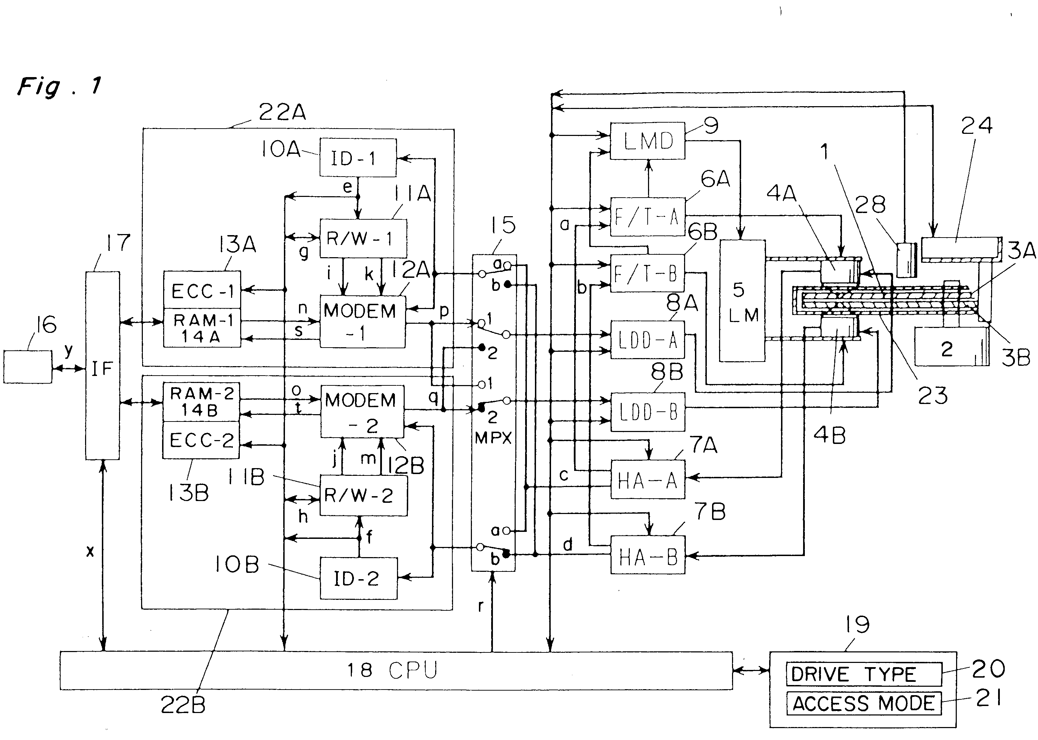

Fig. 1 shows a construction of an optical data recording and reproducing apparatus having two optical heads employed therein according to a preferred embodiment of the present invention.

Referring to Fig. 1, reference numeral 1 denotes an optical disk loaded in a cartridge 23 which is linked onto a motor 2 for rotating the optical disk 1. A loading mechanism 24 loads the cartridge 23 onto a rotary shaft of the motor 2. The optical disk is put in the disk cartridge 23 having a discrimination sensor hole for discriminating a recording film surface. The optical disk 1 is of a dual-sided type having a pair of side-A and side-B recording films.

In a similar manner to that of the general optical disk as shown in Fig. 7 (a), the optical disk 1 is provided with a pair of the side-A recording film (3A) and the side-B recording film (3B) physically coupled to each other by means of an adhesive layer (73). The optical disk 1 is provided by forming a recording film pair on two replica disks reproduced from two master disks having spirals of tracks reversely- directed to each other and physically coupling the two replica disks together such that the pair of recording films are faced to each other. That is, the direction of the spiral track formed on the side-A recording film 3A is reverse to that formed on the side-B recording film 3B.

Reference numerals 4A and 4B denote optical heads having semiconductor laser units for applying laser beams to the recording films 3A and 3B respectively. Reference numeral 5 denotes a linear motor LM which moves the optical heads 4A and 4B to search a target track formed on the recording films 3A and 3B. Reference numeral 28 denotes a sensor for detecting a sensor hole for discrimination between the side-A film and the side-B film of a disk and for discrimination between the double-sided disk and a single-sided disk.

Fig. 7 (b) shows the disk cartridge having a discrimination sensor hole according to the present invention. As shown in Fig. 7 (b), reference numeral 75 denotes a light protection switch, numeral 76 a shutter, and numeral 77 a pair of sensor holes A and B. Reference numerals 78 and 79 denote an alignment hole and a location hole respectively serving as reference holes for defining the loading position of the cartridge 23. The cartridge 23 protects the optical disk 1, and the shutter 76 is opened when inserted in a drive mechanism so that the optical heads 4A and 4B can access to the optical disk 1. When the cartridge 23 is ejected from the drive mechanism, the shutter 76 is automatically closed thereby to protect the optical disk 1 from the outside. The recording operation of data onto the optical disk 1 is prohibited when the light protection switch 75 is turned on. The sensor hole A is one for discriminating a single-sided/double-sided type, and the sensor hole B is one for discriminating side-A/side-B, which indicates, for example, four cases:
(1) when hole A is closed, double-sided type disk is indicated;
(2) when hole A is opened, single-sided type disk is indicated;
(3) when hole B is closed, side A surface is indicated; and
(4) when hole B is opened, side B surface is indicated, thereby detecting the opening/closing condition of the sensor holes by means of the sensor 28. As the sensor 28, there may be used a microswitch, a photosensor or the like.

Referring back to Fig. 1, reference numerals 6A and 6B denote focus tracking control circuits F/T-A and F/T-B respectively for controlling the focusing and tracking of the laser beam and effecting a track retrace of the optical heads 4A and 4B. Reference numerals 7A and 7B denote head amplifier circuits HA-A and HA-B which respectively amplify servo error signals a and b and reproduction signals c and d read out from the recording films 3A and 3B through the optical heads 4A and 4B, where the signals a and b and reproduction signals c and d are converted into binary data through the head amplifier 7A and 7B. Reference numerals 8A and 8B denote laser drive circuits LDD-A and LDD-B which respectively drive the semiconductor laser units of the optical heads 4A and 4B. Reference numeral 9 denotes a liner motor control circuit LMD which controls the drive of the linear motor 5 to make the optical heads 4A and 4B seek a target track.

Reference numerals 10A and 10B denote sector ID reproduction circuits which read track sector addresses e and f from the sector IDs of the reproduction signals c and d fed from the optical heads 4A and 4B respectively. Reference numeral 11A and 11B denote sector recording and reproduction control circuits which respectively compare the track sector addresses e and f with target sector addresses g and h for recording and reproducing data to generate write-gate signals i and j and read-gate signals k and m for the sectors. Reference numerals 12A and 12B denote data modulation and demodulation circuits MODEM-1 and MODEM-2 which digitally modulate coded data n and o according to, e.g., 2-7 RLLC (Run Length Limited Code) method or the like to output modulation signals p and q and demodulate the reproduction signals c and d to output demodulation data s and t respectively.

Reference numerals 13A and 13B denote error correction circuits ECC-1 and ECC-2 having buffer memories RAM-1 (14A) and RAM-2 (14B) respectively for temporarily storing data, where the error correction circuits 13A and 13B generate the coded data n and o by adding an error correction code to the corresponding recording data to detect and correct the error of the demodulation data s and t respectively.

Reference numeral 15 denotes a multiplexer (MPX) which selectively distributes the modulation signals p and q output from the data modulation and demodulation circuits 12A and 12B to the laser drive circuits 8A and 8B according to a switching signal r transmitted from a microcomputer (CPU) 18 to the multiplexer 15 while selectively connect the reproduction signals c and d from the head amplifier circuits 7A and 7B to the data modulation and demodulation circuits 12A and 12B according to the switching signal r.

Reference numeral 16 denotes a host computer which is connected to an interface (IF) 17 by way of an SCSI (Small Computer System Interface) bus y. The interface 17 is connected to the buffer memories 14A and 14B included in channel-1 and channel-2 data recording and reproduction circuits 22A and 22B. The interface 17 is further connected to the microcomputer 18 by way of another data bus x. The microcomputer 18 controls the entire system of the optical data recording and reproducing apparatus. The microcomputer 18 has a memory 19 which comprises a drive type data memory 20 and an access mode data memory 21, where the drive type data memory 20 stores drive type data representing the number of optical heads for use in the usable optical data recording and reproducing apparatus, while the access mode data memory 21 stores access mode data representing a volume format such as a sector recording order recorded in access mode registration areas of the volume management areas of the side-A recording film 3A and the side-B recording film 3B of the optical disk 1.

The channel-1 data recording and reproduction circuit 22A comprises the circuit blocks 10A, 11A, 12A, and 13A, while the channel-2 data recording and reproduction circuit 22B comprises the circuit blocks 10B, 11B, 12B, and 13B.

In the present embodiment, although Fig. 1 shows an example having two data channel systems, any one of the channel data recording and reproduction circuits 22A and 22B may be used. In the case of employing one channel data recording and reproduction circuit, it is impossible to simultaneously record or reproduce signals on the side-A recording film 3A and the side-B recording film 3B.

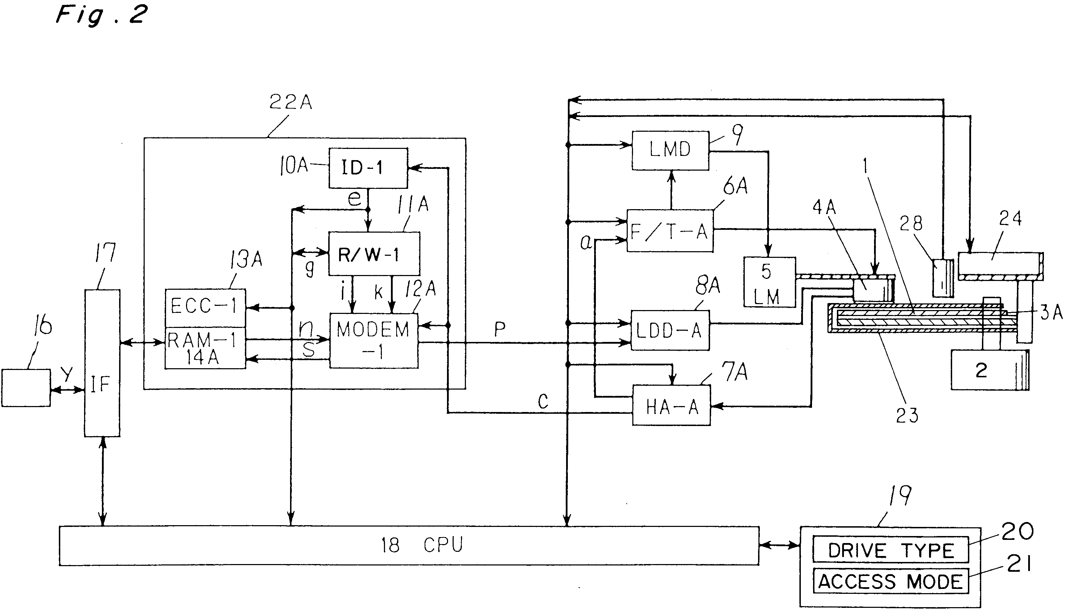

Fig. 2 shows a modified example of an optical data recording and reproducing apparatus having one optical head in accordance with the present invention. As apparent from comparison between Figs. 1 and 2, the apparatus of the modified example is composed of the blocks of one channel of the upper half of the apparatus in the embodiment shown in Fig. 1. Therefore, redundant explanation thereof is omitted here for the brevity.

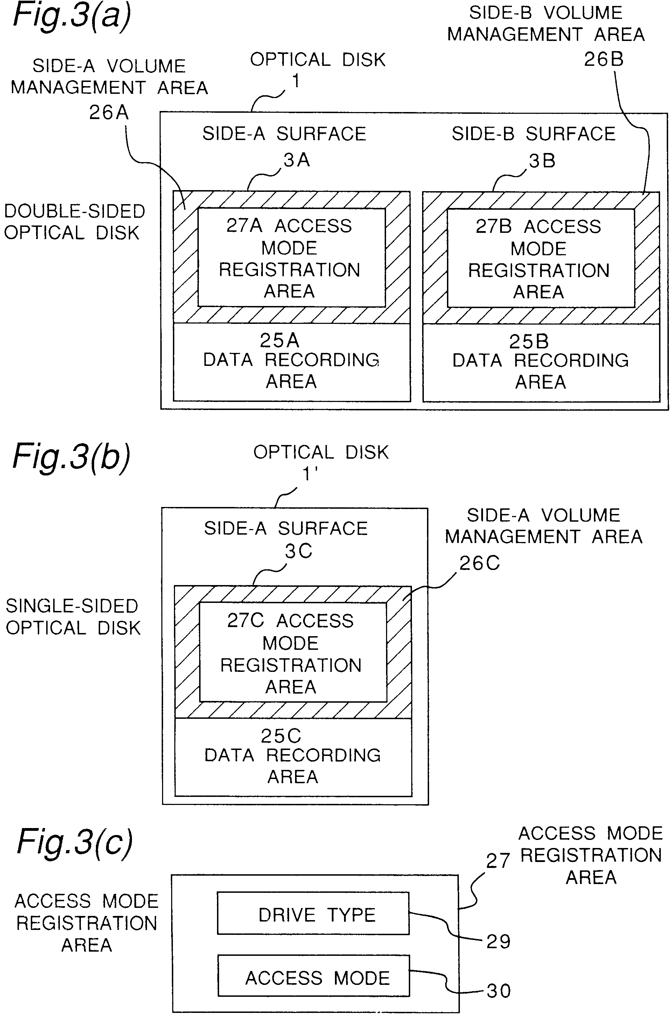

The following describes data recording areas and volume management areas each including an access mode registration area in an optical disk according to the embodiment with reference to Figs. 3 (a) through 3 (c).

Figs. 3 (a), 3 (b) and 3 (c) show diagrams of a data recording area 25 and a volume management area 26 having an access mode registration area 27 of an optical disk in accordance with an embodiment of the present invention, wherein Fig. 3 (a) shows a case of a double-sided optical disk, Fig. 3 (b) shows a case of a single-sided optical disk 1', and Fig. 3 (c) shows an embodiment of the contents of the access mode registration area 27 in accordance with the present invention.

Referring to Fig. 3 (a), reference numerals 25A and 25B denote data recording areas of the side-A recording film 3A and the side-B recording film 3B of the double-sided optical disk 1. Reference numerals 26A and 26B denote volume management areas of the side-A recording film 3A and the side-B recording film 3B of the double-sided optical disk 1, where access mode registration areas 27A and 27B are respectively provided in the volume management areas 26A and 26B of the side-A recording film 3A and the side-B recording film 3B.

Referring to Fig. 3 (b), reference numeral 25C denotes a data recording area of a side-A recording film 3C of a single-sided optical disk 1'. Reference numeral 26C denotes a volume management area of the side-A recording film 3C. Reference numeral 27C denotes an access mode registration area which is included in the volume management area 26C.

Referring to Fig. 3 (c), the access mode registration area 27 (27A, 27B, and 27C) includes a drive type data recording area 29 for recording therein drive type data for registering the number of optical heads usable in the apparatus and an access mode data recording area 30 for recording access mode data for registering the volume format data. The number of optical heads represents whether the optical data recording and reproducing apparatus is a single-head type or a double-head type, while the volume format data-represents the order of data to be recorded or reproduced on sectors by means of each optical head as to be described below. That is, the access mode data recording area 30 records access mode data for defining a recording and/or reproducing procedure of data on sectors to prescribe an order of the data to be recorded and/or reproduced on the sectors of the optical disk.

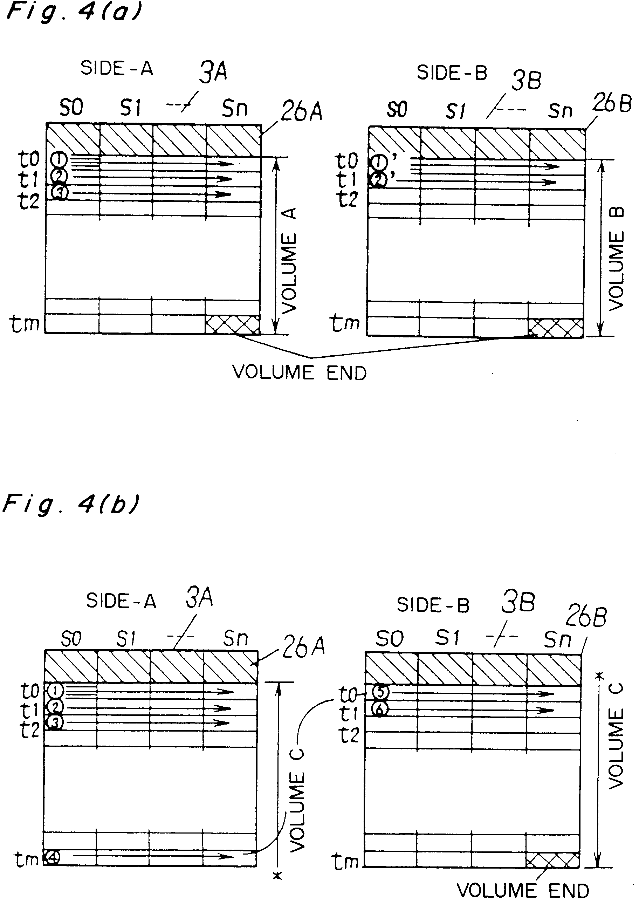

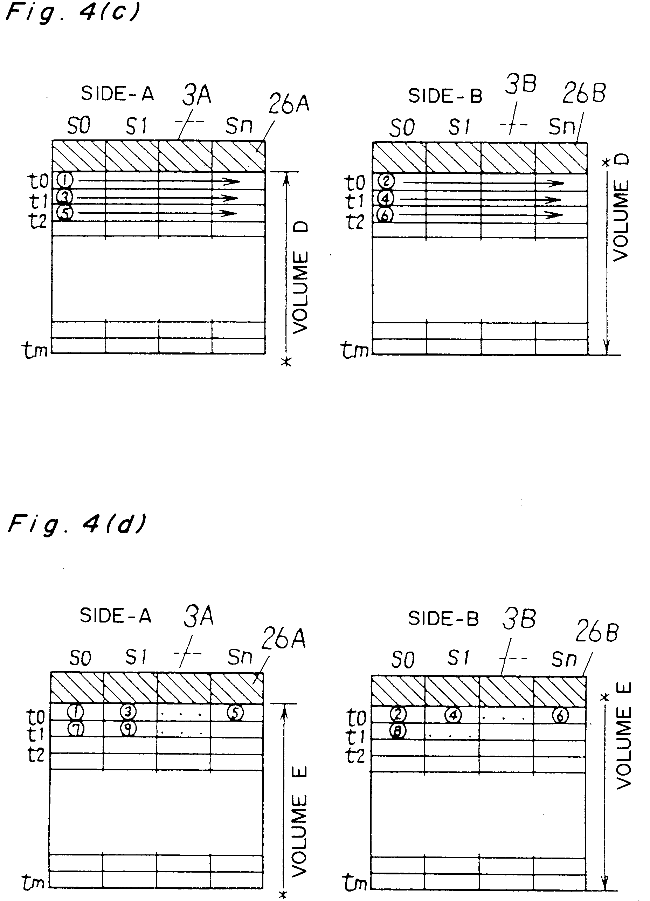

Figs. 4 (a), 4 (b), 4 (c), and 4 (d) show exemplified volume formats representing the order of data to be recorded or reproduced on sectors, which are registered in each access mode registration area 27 formed in each volume management area 26 of an optical disk according to the present invention.

Referring to Figs. 4 (a) through 4 (d), reference numerals S0, S1, ... Sn denote sectors, and reference numerals t0, t1, t2, ..., tm denote tracks.

Fig. 4 (a) shows a two-volume format (single-side complete recording format). According to the two-volume format shown in Fig. 4 (a), a volume A and a volume B are independent from each other and data of the volume A and volume B are independently recorded respectively on the side-A recording film 3A and the side-B recording film 3B.

Fig. 4 (b) shows a one-volume format-1 (recording-film sequential recording format). According to the one-volume format-1 shown in Fig. 4 (b), data of a volume C is recorded in a manner that, when the side-A recording film 3A is completely filled, data are then recorded on the side-B recording film 3B.

Fig. 4 (c) shows a one-volume format-2 (dual-film simultaneous track-unit recording format). According to the one-volume format-2 shown in Fig. 4 (c), data of a volume D is recorded in units of tracks alternately on the side-A recording film 3A and the side-B recording film 3B by means of two optical heads.

Fig. 4 (d) shows a one-volume format-3 (dual-film simultaneous sector-unit recording format). According to the one-volume format-3 shown in Fig. 4 (d), data of a volume E is recorded in units of sectors alternately on the side-A recording film 3A and the side-B recording film 3B by means of two optical heads.

In the case of the two-volume format shown in Fig. 4 (a), data of the volumes A and B are independently recorded in units of the side-A recording film 3A and the side-B recording film 3B, where the dual-sided optical disk is treated as two single-sided optical disks by a user. Therefore, data recording and reproduction operations can be effected even when the dual-sided optical disk is loaded in a one-head type optical data recording and reproducing apparatus.

In the case of one-volume formats-1, -2 and -3 shown in Figs. 4 (b), 4 (c) and 4 (d), contrary to the case of Fig. 4 (a), data recording and reproduction operations can be effected only when the dual-sided optical disk is loaded in a two-head type optical data recording and reproducing apparatus because an identical data file is recorded separately on both recording films 3A and 3B. Conversely, in a one-head type optical data recording and reproducing apparatus, file data cannot be reproduced correctly when an optical disk having any of the formats as shown in Figs. 4 (b), 4 (b), or 4 (d) is inserted in the apparatus. Accordingly, in order to record and reproduce data on a double-sided optical disk compatibly in a one-head type optical data recording and reproducing apparatus and a two-head type optical data recording and reproducing apparatus, the volume format should be a two-volume format constructed as shown in Fig. 4 (a).

In the case of volume formats as shown in Figs. 4 (c) and 4 (d), the sectors of the side-A and the side-B recording films are preferably arranged orderly in sector phase. In more detail, in order to delay detection of an output from the optical head directed to the side-B film after detection of an output from the optical head directed to the side-A film by a specified time-lag, the side-B film is physically coupled with the side-A film so that a sector identifier section of the sector S0 of the side-B film lags behind in position by a specified distance from a sector identifier section of the sector S0 of the side-A film.

With the above-mentioned arrangement, the signal processing procedures for the optical head on the side-A film and the optical head on the side-B film are univocally determined to allow an optimum data recording and reproduction flow control, achieving a high-speed double-film access without waiting. However, the above-mentioned sector phase adjustment between the side-A film and the side-B film causes a cost increase in manufacturing disks. Therefore, by preliminarily recording an identifier signal for the sector phase adjustment in a pre-pit form in the volume management areas 26A and 26B just as in the case of an access mode 30 of the access mode registration area 27, the user can select the optimum disk for various uses.

On the other hand, in order to double the on-line capacity by-employing a dual-film use of an optical disk in a two-head type optical data recording and reproducing apparatus, any of the volume formats as shown in Figs. 4 (b), 4 (c), and 4 (d) is required. Therefore, for the purpose of making it possible to use an optical disk having such volume formats as shown in Figs. 4 (b), 4 (c), and 4 (d) either in the one-head type or two-head type optical data recording and reproducing apparatus, the access mode registration area 27 is provided in the optical disk for registering the access mode data, which allows the optical data recording and reproducing apparatus to detect the volume formats.

The access mode data can be defined, for example, by the following four bytes:

### A) Head number byte (HB)

- 1 =: usable in a one-head type optical data recording and reproducing apparatus (also usable in a two-head type)
- 2 =: usable in a two-head type optical data recording and reproducing apparatus

### B) Access mode byte

### (a) Volume byte (VB)

- 0 =: single-sided optical disk with one-volume format
- 1 =: double-sided optical disk with two-volume format
- 2 =: double-sided optical disk with one-volume format

### (b) Sector recording order byte (RB)

- 0 =: sequential recording
- 1 =: simultaneous recording

### (c) Recording unit byte (UB)

- 0 =: in units of tracks
- 1 =: in units of sectors

In the case where data is recorded on a double-sided optical disk having its side-A and side-B recording films with their spiral track directions reverse to each other in a two-head type optical data recording and reproducing apparatus, in order to apply the optical disk to a one-head type optical data recording and reproducing apparatus, the one-head optical data recording and reproducing apparatus is required to identify the volume format of the optical disk. In more detail, in the case of the two-volume format as shown in Fig. 4 (a), data compatibilities can be assured even when the optical disk is used in the one-head type optical data recording and reproducing apparatus, and neither recording nor reproduction can be effected in the case of any of the one-volume formats as shown in Figs. 4 (b), 4 (c), and 4 (d). Therefore, the one-head optical data recording and reproducing apparatus is required to discriminate whether the optical disk is of the one-volume format or of the two-volume format. The access mode data can be determined, for example, by the following one byte.

### (a) Access byte (AB)

- 1 =: 1-volume format
- 2 =: 2-volume format

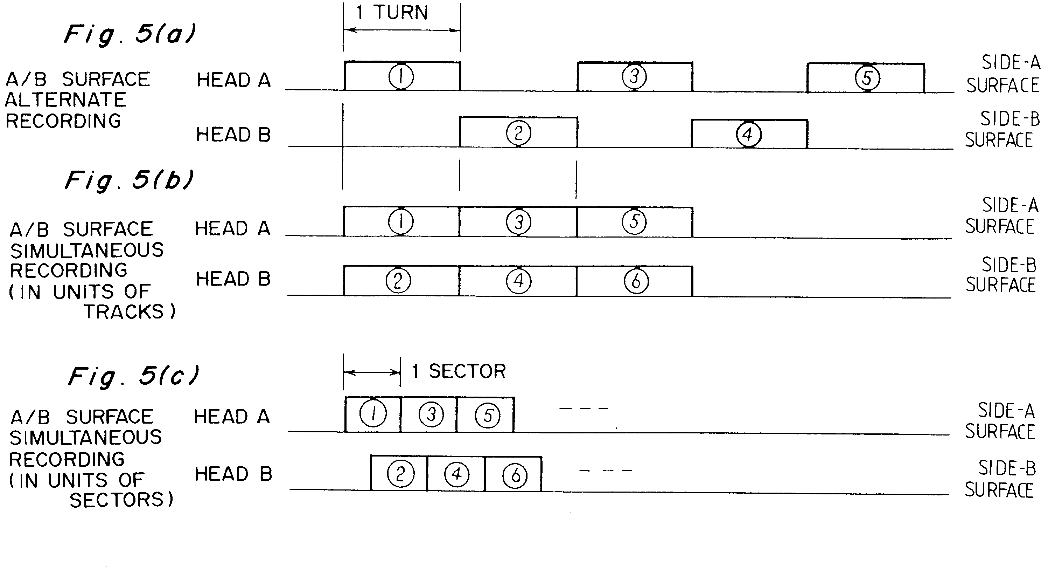

Figs. 5 (a), 5 (b), and 5 (c) show timing charts for explaining the order of sector access when data of volumes D and E are recorded.

Fig. 5 (a) shows a case in which data of the volume D as shown in Fig. 4 (c) is recorded in units of tracks alternately on the side-A film and the side-B film. In the present case, it is sufficient to provide only one of the channel data recording and reproduction circuits 22A and 22B as shown in Fig. 1.

Fig. 5 (b) shows a case in which the volume D as shown in Fig. 4 (c) is recorded in units of tracks simultaneously on the side-A film and the side-B film. In this case, both the channel data recording and reproduction circuits 22A and 22B as shown in Fig. 1 are necessary.

Fig. 5 (c) shows a case in which the volume E as shown in Fig. 4 (d) is recorded in units of sectors simultaneously on the side-A film and the side-B film. In the present embodiment, there is used a double-sided optical disk having side-A and side-B recording films fit to each other, where the sector position of the side-B recording film lags in position behind the side-A recording film by 1/2 sector. Therefore, the optical head B starts to record data after the start of data recording operation of the optical head A by a time lapse corresponding to the 1/2 sector. The arrangement for the time-lag corresponding to the 1/2 sector provides a margin in managing the control timing of supplying data to the two optical heads. The numbers encircled by the circles in Figs. 4 and 5 represent the order of recording.

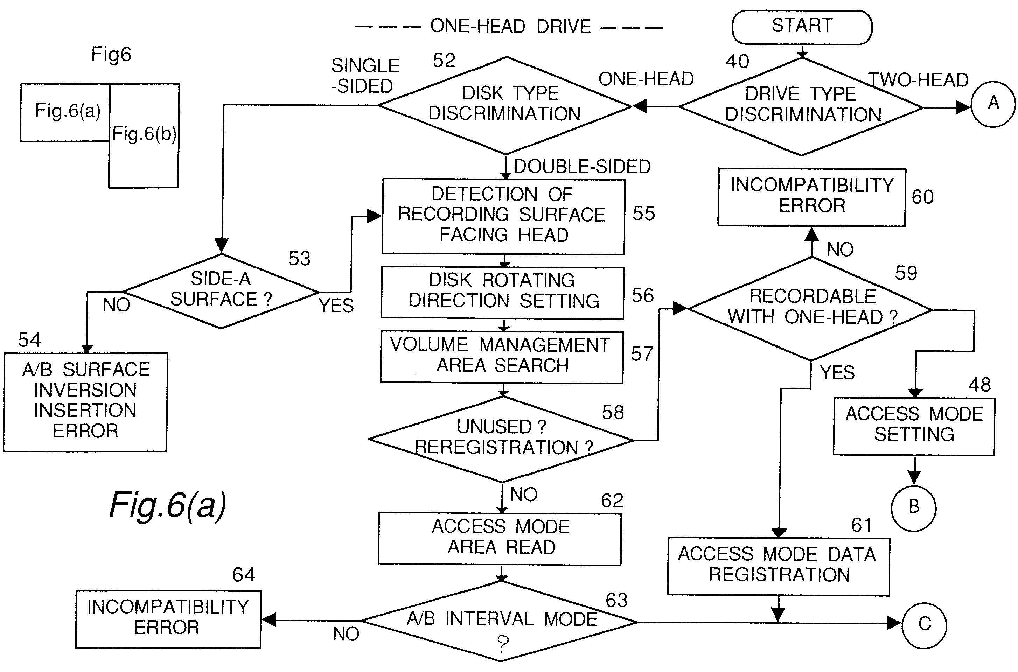

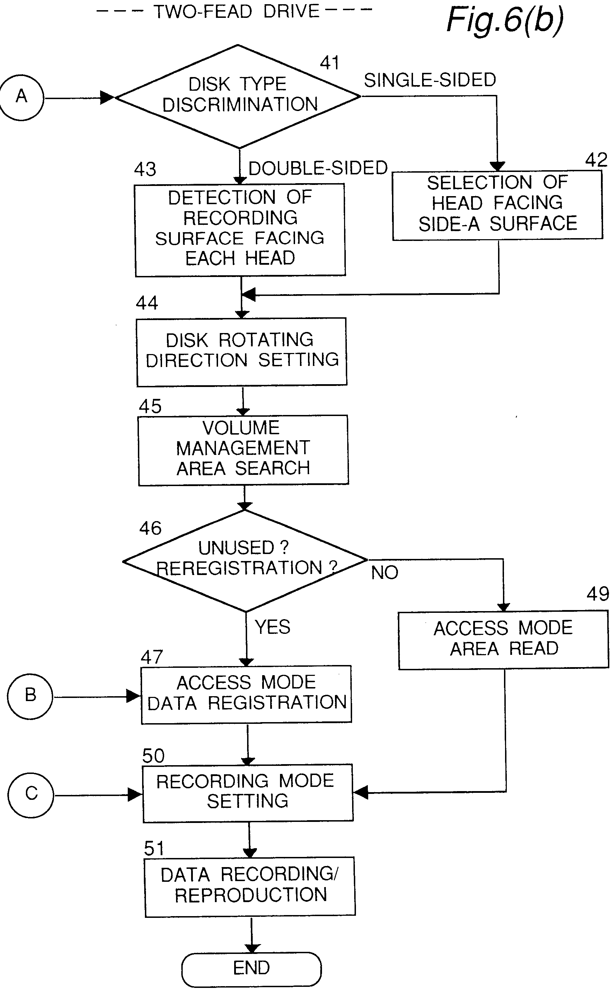

The following describes the operation of a double-sided optical disk recording and reproducing apparatus for recording and reproducing data on an optical disk having the above-mentioned construction with reference to Fig. 6.

Fig. 6 shows a flow chart of a fundamental operation of the microcomputer 18 of the one-head type optical data recording and reproducing apparatus and the two-head type optical data recording and reproducing apparatus of the present invention.

When the optical disk 1 is loaded onto the motor 2, the microcomputer 18 judges whether the optical data recording and reproducing apparatus is of a one-head type or two-head type according to micro-code data of apparatus type stored in a non-volatile section of the memory 19 in step (40).

When the optical data recording and reproducing apparatus is the two-head type, the sensor hole of the disk cartridge 23 loaded onto the motor 2 is detected by the sensor 28 to discriminate between the side-A film and the side-B film and discriminate between the single-sided type and the double-sided type in step (41).

When the loaded disk is a single-sided optical disk, the optical head corresponding to the side-A recording film 3A is detected through the side-A/side-B sensor hole in step (42). When the loaded disk is a double-sided optical disk, the recording films facing the optical heads 4A and 4B are detected in step (43).

The spiral track direction is perceived from a relation between each recording film and each optical head facing the disk, and the rotating direction of the motor 2 is set up to rotate the optical disk 1 in a prescribed direction, which is followed by a focus tracking control in step (44).

The microcomputer 18 searches the volume management area 26 by means of the optical heads 4A and 4B to access the access mode registration area 27 in step (45). Then it is judged whether the optical disk 1 is an unused (new) disk or a disk subject to an access mode data reregistration in step (46).

When the optical disk 1 is an unused (new) disk or a disk subjected to an access mode reregistration, a recording operation of the optical data recording and reproducing apparatus is set up in step (48) of access mode designation, and then the access mode data is recorded in the access mode registration area 27 in step (47).

When the optical disk 1 is a used disk or a disk subjected to no access mode reregistration, the access mode data 29 and 30 (see Fig. 3(c)) are read and stored into the areas 20 and 21 of the memory 19 in step (49). The microcomputer 18 sets up the data multiplexer 15 according to the contents of the areas 20 and 21 and the relation of side-A recording surface-optical head A, side-B recording surface-optical head B; side-A recording surface-optical head B, side-B recording surface-optical head A in step (50). In more detail, in the case of the side-A recording surface-optical head A, two switches provided in the multiplexer 15 are connected to terminals a (shown by white circles) so that the signals of the channel-1 and channel-2 data recording and reproduction circuits 22A and 22B are fed to the optical heads 4A and 4B respectively. In the case of the side-A recording surface-optical head B, the two switches provided in the multiplexer 15 are connected to terminals b (shown by black circles) so that the signals of the channel-1 and channel-2 data recording and reproduction circuits 22A and 22B are fed to the optical heads 4B and 4A respectively.

Thus, when the initial setting of the two-head type optical data recording and reproducing apparatus is completed, data recording and reproduction can be effected between the microcomputer 18 and the host computer 16 as to be described hereinafter in step (51).

When the optical data recording and reproducing apparatus is a one-head type, the sensor hole of the loaded disk cartridge 23 is detected by the sensor 28 to discriminate the disk type between the side-A film and the side-B film and between the single-sided type and the double-sided type in step (52). When the optical disk is a one-sided optical disk, it is detected through a side-A/side-B sensor hole whether the effective side-A recording film faces the optical head 4A and whether the optical disk 1 is inserted with its side-A film and the side-B film inverted, or upside down in step (53).

When the optical disk is inserted invertedly, or upside down, an error of side-A/side-B film inversion insertion is issued, ejecting the cartridge 23 out of the apparatus in step (54).

When a single-sided optical disk is inserted normally or the optical disk is a double-sided type one, the recording film facing the optical head 4A is detected in step (55). Then the spiral track direction of the recording film is detected and the rotating direction of the motor 2 is set up to rotate the optical disk 1, which is followed by a focus tracking control in step (56).

The microcomputer 18 searches the volume management area 26 by means of the optical head 4A and accesses the access mode registration area 27 in step (57).

Then it is discriminated whether the optical disk 1 is an unused (new) one or a disk subjected to an access mode data reregistration in step (58).

When the optical disk 1 is an unused (new) disk or a disk subjected to an access mode data reregistration, compatibilities between the access mode setting in the step of access mode designation (48) and the one-head type optical data recording and reproducing apparatus are detected in step (59).

When the access mode designation in step (48) requires a two-head type apparatus, an error of incompatibility is issued in step (60).

When the access mode designation in step (48) is compatible with the apparatus, a recording operation mode of the optical data recording and reproducing apparatus is set up, and thereafter the access mode data 20 and 21 are recorded into the access mode registration area 27 in step (61).

When the optical disk 1 is a used disk or a disk subjected to no access mode data reregistration, the access mode data 29 and 30 are read to be stored into the areas 20 and 21 of the memory 19 in step (62).

The microcomputer 18 checks whether the contents of the memories 20 and 21 are in a volume format capable of data recording and reproduction without inverting the side-A/side-B films of the disk by means of one head. When the format is compatible, the microcomputer 18 sets up the data multiplexer 15 according to the combination of the optical head A and the side-A or side-B recording film in step (50).

When the volume format is incompatible and a data file is recorded stretching over both the side-A recording film and the side-B recording film, an error of apparatus incompatibility is issued, ejecting the cartridge out of the apparatus in step (64).

When the initial setting of the one-head type optical data recording and reproducing apparatus is completed, data recording and reproduction can be effected between the microcomputer 18 and the host computer 16 as to be described hereinafter.

Although the registration of the access mode data is performed by the microcomputer 18 in the above description, the host computer 16 may directly access the volume management area 26 and issue access mode data for data recording just as in the case of the regular data area 25.

### RECORDING OPERATION

The following describes a data recording operation of the apparatus.

The host computer 16 generates a write command signal via the SCSI bus y by way of the interface (IF) 17 to the microcomputer 18 which interprets the command signal and transmits a command signal to the liner motor control circuit 9 to make the optical heads 4A and 4B seek a target track by driving the linear motor 5.

Recording data fed from the host computer 16 are once stored in the RAMs 14A and 14B, while the error correction circuits 13A and 13B output code data n and o respectively by adding an error correction code to the recording data.

The microcomputer 18 sets up a recording sector address and a recording command in the sector recording and reproduction control circuits 11A and 11B. When the sector recording and reproduction control circuits 11A and 11B detect a specified sector, the write gate signals i and j are applied to the data modulation and demodulation circuits 12A and 12B respectively in which the modulation signals p and q are produced by modulating the code data n and o according to e.g. 2-7 RLLC modulation pattern. The modulation signals p and q are transmitted from the circuits 12A and 12B to the laser drive circuits 8A and 8B respectively through the multiplexer 15.

The optical head 4A records the modulation signal p on the side-A recording film 3A, while the optical head 4B records the modulation signal q on the side-B recording film 3B. The above-mentioned data recording operation is repeated for a specified number of sectors. When an double-sided optical disk 1 is inserted invertedly, or upside down into the apparatus, the multiplexer 15 applies the modulation signals p and q respectively to the laser drive circuits 8B and 8A reversely in contrast with the above-mentioned case according to the signal switching signal r from the microcomputer 18.

### READING OPERATION

The following describes a data reading operation.

When the host computer 16 generates a read command signal on the SCSI bus y by way of the interface 17 to the microcomputer 18 which interprets the command signal and which generates a command signal to the liner motor control circuit 9 to make the optical heads 4A and 4B seek a target track by driving the linear motor 5. The microcomputer 18 sets up a read sector address and a read command in the sector recording and reproduction control circuits 11A and 11B. When the sector recording and reproduction control circuits 11A and 11B detect a specified sector, read gate signals k and m are applied to the data modulation and demodulation circuits 12A and 12B.

The data modulation and demodulation circuits 12A demodulates the reproduction signal c from the side-A recording film 3A and stores the demodulation data S into the RAM-1 14A. The data modulation and demodulation circuit 12B demodulates the sector of the reproduction signal d from the side-B recording film 3B and stores the demodulation data t into the RAM-2 14B.

The demodulation data stored in the RAM-14A and RAM-14B are subject to error correction in the error correction circuits 13A and 13B and stored again in the RAM-14A and RAM-14B. The error-corrected reproduction data are transmitted to the host computer 16 by way of the interface 17. The above-mentioned data reading operation is repeated for a specified number of sectors. When a double-sided optical disk 1 is inserted invertedly, or upside down, the data multiplexer 15 transmits the reproduction signal c of the side-A recording film 3A from the optical head 4A to the sector ID reproduction circuit 10B and to the data modulation and demodulation circuit 12B, and transmits the reproduction signal d of the side-B recording film 3B from the optical head 4B to the sector ID reproduction circuit 10A and to the data modulation and demodulation circuit 12A according to the signal switching signal r transmitted from the microcomputer 18 to demodulate the reproduction signals.

According to the present invention as described above, when a double-sided optical disk or a single-sided optical disk is inserted in a two-head type optical data recording and reproducing apparatus, the side-A/side-B film insertion direction is detected by means of the optical data recording and reproduction apparatus and the recording film facing each optical head is checked to switch between the modulation signal output from the channel data reproduction circuit and the reproduction signal from the optical head through a selection in the multiplexer. With the above-mentioned arrangement, data recording and reproduction can be effected without reinverting nor reinserting the optical disk.

Furthermore, there are recorded data of the number of heads and the sector recording access order of the optical data recording and reproducing apparatus recorded in the access mode registration area provided in the volume management area of each recording film before using each optical disk, and then the data in the access mode registration area is read out when the optical data recording and reproduction apparatus is loaded with an optical disk. With the above-mentioned arrangement, there can be detected in advance such errors as erroneous recording, erroneous reproduction, or unable data read which may take place when a double-sided optical disk recorded with its side-A and side-B films handled as one volume by a two-head optical data recording and reproduction apparatus is inserted into a one-head optical data recording and reproduction apparatus.

Furthermore, a double-sided optical disk recorded by a one-head optical data recording and reproducing apparatus can be subject to data recording and reproduction in a two-head optical data recording and reproducing apparatus.

Further by supporting the double-sided two-volume format, data compatibilities with a double-sided optical disk recorded by a one-head optical data recording and reproduction apparatus can be assured. By effecting the side-A/side-B film one-volume data recording and reproduction operations, the two-head optical data recording and reproduction apparatus can achieve a double-speed data transmission and a doubled line capacity putting the full functions of the two-head construction into effect.

Further by recording the existence or absence of a sector phase alignment in the form of a pre-pit in the volume management area, the user can select the most appropriate disk for use in each application.

According to the present invention as described above, either a double-sided optical disk or a one-sided optical disk can be used in either a one-head optical data recording and reproducing apparatus or a two-head optical data recording and reproducing apparatus. Furthermore, data compatibilities with a double-sided optical disk can be assured by means of the access mode registration area of each recording film, and the data transmission speed and the on-line capacity can be doubled in a two-head optical data recording and reproduction apparatus, which provides more practical effects.

## Claims

1. An optical disk for use in an optical data recording and/or reproducing apparatus, said optical disk being provided with at least one data recording film having a plurality of data recording tracks (t0, t1, t2, ..., tm) formed thereon, each track divided into a plurality of data recording sectors (S0, S1, ..., Sn), each sector serving as a unit for recording and/or reproducing data thereon, said data recording film comprising:
a data recording area (25) for recording optical data; and
a volume management area (26) including an access mode registration area (27) which records access mode data for defining a recording and/or reproducing procedure of data on said sectors to prescribe an order of the data to be recorded and/or reproduced on said sectors and defining a volume format of the optical disk.

2. The optical disk as claimed in claim 1, wherein said access mode registration area (27) records access mode data which represents the number of optical heads for use in the optical data recording and reproducing apparatus, the number of data volumes of the optical disk, and a sector recording order and/or track recording and sector recording units.

3. The optical disk as claimed in claim 1 or 2, wherein said optical disk is provided with a pair of a side-A recording film (3A) and a side-B recording film (3B) physically coupled to each other by means of an adhesive layer (73).

4. The optical disk as claimed in claim 3, wherein said recording films are formed with spiral tracks, the direction of the spiral track formed on the side-A recording film being reverse to that on the side-B recording film.

5. The optical disk as claimed in claim 3 or 4, wherein said side-A recording film is physically coupled to said side-B recording film with a sector phase alignment such that the relation in phase between a reference sectors (S0) of the side-A recording film and the side-B recording film is shifted in position by a specified distance.

6. The optical disk as claimed in claim 5, wherein said volume management area records therein in a pre-pit form a sector phase alignment identification signal representing whether or not the sector phase alignment is set up.

7. The optical disk as claimed in any one of claims 3 to 6, wherein said volume management area records therein data representing whether the optical disk conforms to a one-volume format or a two-volume format.

8. An optical data recording and reproducing apparatus for recording and reproducing data, compatible with any of a single-sided optical disk having a single recording film and a double-sided optical disk having two recording films, each recording film formed thereon with a recording track divided into a plurality of sectors each serving as a unit for recording and reproducing data, said optical disk being put in a disk cartridge (23) having a discrimination sensor hole for discriminating a recording film surface, said optical data recording and reproducing apparatus comprising:
optical disk rotating means (2) for forwardly and reversely rotating said optical disk loaded thereon;
cartridge loading means (24) for loading said disk cartridge onto said optical disk rotating means (2);
recording film surface detection means (28) for detecting a loading condition of a recording film of said optical disk onto said optical disk rotating means (2) by detecting the sensor hole of said disk cartridge;
optical head means (4A, 4B) for recording and/or reproducing a data signal on and/or from the recording film surface by applying a laser beam to the recording film surface;
servo means (6A, 6B) for focusing and tracking the laser beam from said optical head means onto a specified track;
track search means (5, 9) for searching a target track by controlling the transport of said optical head means;
signal reproduction means (7A, 7B) for amplifying a reproduction signal reproduced by means of said optical head means;
ID reproduction means (10A, 10B) for reading a sector address from an output of said signal reproduction means (7A, 7B);
sector recording and reproduction control means (11A, 11B) for starting recording and reproduction of data by detecting a target sector address upon coincidence of the sector address output of said ID reproduction means (10A, 10B) with the target sector address;
data recording and reproduction means (12A, 12B) for effecting data recording and reproduction on the target sector of the recording film surface by an output data of said sector recording and reproduction control means;
laser drive means (8A, 8B) for modulating a laser beam of said optical head means by an output of said data recording and reproduction means; and
apparatus control means (18) for controlling the data recording and reproduction on said optical disk by issuing a control command signal to each of said means and watching the condition of each of said means, wherein said apparatus control means (18) detects each recording film surface facing an optical head by means of said recording film surface detection means (28) to thereby rotate said optical disk rotating means forwardly or reversely, and said track search means searching a volume management area of the recording film surface, said data recording and reproduction means recording access mode data in an access mode registration area of each recording film surface of said optical disk, wherein said access mode data is composed of the number of optical heads of the optical data recording and reproducing apparatus, the number of data volumes of the optical disk, and a sector recording order and/or track recording and sector recording units for prescribing a volume format of said optical disk.

9. The optical data recording and reproducing apparatus as claimed in claim 8, wherein said double-sided optical disk is formed by physically coupling a side-A recording film with a side-B recording film.

10. The optical data recording and reproducing apparatus as claimed in claim 8 or 9, wherein said apparatus control means (18) detects each recording film surface facing the optical head when an unused new optical disk is loaded in said apparatus.

11. The optical data recording and reproducing apparatus as claimed in claim 8, 9 or 10, wherein said volume management area of the optical disk includes the sector recording access mode registration area to record the access mode data, wherein said apparatus further comprises storage means (19) for storing data read from said access mode registration area by said data recording and reproduction means, and wherein said data recording and reproduction means reads the access mode registration area, storing the sector recording access mode data into said storage means, thereafter checking compatibilities between the optical disk and the apparatus, and ejecting the optical disk by driving said cartridge loading means when the optical disk is not compatible with the apparatus.

12. An optical data recording and reproduction apparatus for recording and reproducing data, compatible with a single-sided optical disk having one recording film and a double-sided optical disk having a pair of recording films, each recording film being formed thereon with a track divided into sectors each serving as a unit for recording and reproducing data, each optical disk being provided with a data recording area for recording data and a volume management area including a sector recording access mode registration area serving to record access mode data comprised of the number of optical heads of the optical data recording and reproduction apparatus, the number of data volumes on the optical disk, and a sector recording order and/or track recording and sector recording units for prescribing a volume format as put in a cartridge having a recording surface discrimination sensor hole, said optical data recording and reproduction apparatus comprising:
optical disk rotating means capable of rotating forwardly and reversely as loaded with said optical disk;
cartridge loading means for loading the cartridge onto said optical disk rotating means;
recording film surface detection means for detecting the loading condition of the side-A recording film surface and the side-B recording film surface onto a rotary shaft of said optical disk rotating means by detecting the sensor hole of the cartridge;
first and second optical heads for recording and reproducing a data signal on the side-A recording film and the side-B recording film by applying a laser beam to the recording film surfaces;
first and second servo means for a focus and tracking servo control of the laser beam from each of the optical heads on a specified track;
track search means for searching a target track by means of the optical heads;
first and second signal reproduction means for amplifying reproduction signals reproduced by means of said first and second optical heads;
first and second ID reproduction means for reading a sector address from an output of said signal reproduction means;
first and second sector recording and reproduction control means for starting data recording and reproduction by detecting a target sector upon coincidence of a sector address output of said ID reproduction means with a target sector address;
first and second data recording and reproduction means for effecting data recording and reproduction on the target sector on each of the side-A recording film and the side-B recording film according to an output of said sector recording and reproduction control means;
first and second laser drive means for modulating laser beams of the optical heads with an output of said data recording and reproduction means;
signal selection means for coupling first and second outputs of said data recording and reproduction means selectively to said first and second laser drive means and coupling first and second outputs of said signal reproduction means selectively to said first and second ID reproduction means and to said first and second data recording and reproduction means; and
apparatus control means for controlling the data recording and reproduction on the optical disk by issuing a control command signal to each of said means and watching the condition of each of the means, wherein said apparatus control means discriminates between the single-sided optical disk and the double-sided optical disk through the sensor hole of the cartridge by said recording film surface detection means, and said apparatus control means recording and reproducing data by activating the optical head facing the recording surface in the case of the single-sided optical disk or making the optical disk rotating means rotate forwardly or reversely according to a vertical insertion condition of the-cartridge by detecting the optical head facing the side-A recording film and the head facing the side-B recording film in the case of the double-sided optical disk, said track search means searching the volume management areas of the side-A recording film and the side-B recording film, and said data recording and reproduction means operating to read the access mode registration data from the access mode registration area in the volume management area to thereby perceive a volume format of the optical disk to record and reproduce data.

13. The optical data recording and reproducing apparatus as claimed in claim 12 further comprising storage means for storing data read out of the access mode registration area by said data recording and reproduction means.

14. The optical data recording and reproducing apparatus as claimed in claim 12 or 13, wherein said double-sided optical disk is formed by physically coupled a side-A recording film with a side-B recording film.

15. The optical data recording and reproduction apparatus as claimed in claim 12, compatible with an optical disk formed by physically coupling a side-A recording film with a side-B recording film as put in a cartridge having a sensor hole for discriminating between the side-A recording film surface and the side-B recording film surface, wherein said apparatus control means rotates said optical disk rotating means forwardly or reversely by detecting the optical head facing the side-A and side-B recording film surfaces through the sensor hole of the cartridge by said recording film surface detection means thereby to switch a signal path between said first and second data recording and reproduction means and said first and second laser drive means and a signal path between said first and second signal reproduction means, said first and second ID reproduction means, and said first and second data recording and reproduction means to allow data recording and reproduction to be achieved correctly even when the cartridge is inserted invertedly.
